# EUROPÄISCHE PATENTSCHRIFT

(11) **EP 0 782 401 B1**
(45) Veröffentlichungstag und Bekanntmachung des Hinweises auf die Patenterteilung: **16.09.1998**
(21) Anmeldenummer: 95939241.6
(22) Anmeldetag: 08.11.1995
(51) Int. Cl.: A41G 3/00

(54) **VORRICHTUNG UND VERFAHREN ZUR HAARVERLÄNGERUNG, HAARVERDICHTUNG UND BEFESTIGUNG VON HAARTEILEN**
METHOD AND DEVICE FOR LENGTHENING AND THICKENING THE HAIR AND FOR FASTENING HAIR PIECES
PROCEDE ET DISPOSITIF PERMETTANT D'ALLONGER ET D'EPAISSIR LES CHEVEUX, ET DE FIXER DES PARTIES DE CHEVEUX

(30) Priorität: 09.11.1994 DE 4440017; 08.06.1995 DE 19520972
(43) Veröffentlichungstag der Anmeldung: 09.07.1997
(73) Patentinhaber: Gäng, Heide-Rose, 80806 München (DE)
(72) Erfinder: Gäng, Heide-Rose, 80806 München (DE)
(74) Vertreter: Füchsle, Klaus, Dipl.-Ing.
(86) Internationale Anmeldenummer: EP9504396
(87) Internationale Veröffentlichungsnummer: WO9614767

(56) Entgegenhaltungen:
- EP-A- 0 133 291
- GB-A- 2 271 057
- US-A- 4 982 748
- US-A- 5 107 867
- PATENT ABSTRACTS OF JAPAN vol. 17 no. 554 (C-1118) ,6.Oktober 1993 & JP,A,05 156506 (HEA DR KK) 22.Juni 1993,

## Beschreibung

Die Erfindung betrifft eine Vorrichtung sowie ein Verfahren zur Verlängerung von Eigenhaar mit Kunsthaar und/oder Echthaar und zur Dauerbefestigung von Kunsthaar und/oder Echthaar.

Zum biosthetischen Leistungsspektrum gehört die Verlängerung und Dauerbefestigung von Eigenhaarbüscheln, d.h. natürlich aus der Kopfhaut herausgewachsenen Haaren, mit Echt- und/oder Kunsthaar. Derartige Verfahren kommen zum einen für medizinische Anwendungen, vor allen Dingen aber für kosmetische Anwendungen zur Verwendung. Hierbei kann das Eigenhaar verlängert werden, aber auch verdichtet werden, indem das Eigenhaar und das daran befestigte Echt- und/oder Kunsthaar auf dieselbe Länge geschnitten wird. In der Technik sind viele Systeme zur Verlängerung und Verdichtung von Eigenhaar bekannt, die in der Zeitschrift "Top Hair Special" 21/94 beschrieben sind. Danach kann Eigenhaar mit Kunsthaar oder Echthaar durch spezielle Knüpf- und Knotentechniken sowie verschiedene Klebetechniken angesetzt werden.

Die US-Patentschrift 5,107,867 beschreibt ein Verfahren zur Haarverlängerung, bei dem Strähnen des anzusetzenden Haares mit einem hitzbeständigen Klebstoff verbunden werden, um einen Pfropfen an einer Strähne von Verlängerungshaar zu bilden, woraufhin eine Beschichtung aus unter Wärmeeintrag schmelzbarem Kunststoff auf diesen Pfropfen aufgetragen wird. Anschließend werden Strähnen des natürlichen Eigenhaares der Person durch einen Schrumpfschlauchabschnitt gefädelt, der in der oben beschriebenen Weise vorbehandelte Pfropfen des Verlängerungshaares ebenfalls in den Schrumpfschlauch eingeführt und der Schrumpfschlauch durch Anwendung von Hitze behandelt. Dabei kann entweder eine nicht näher beschriebene Hitzeklammer zur Anwendung kommen, jedoch auch eine andere geeignete Vorrichtung. Durch den Hitzeeintrag schrumpft einerseits der Schlauch, andererseits schmilzt der schmelzbare Klebstoff und stellt eine dauerhafte Verbindung zwischen dem natürlichen Echthaar und der Verlängerungshaarsträhne her. Der Schlauch soll einen Schutz der Verbindung gegen Umwelteinflüsse, aber auch Haarpflegemittel darstellen. Wird wiederum Hitze am Schrumpfschlauch eingebracht, so kann die Haarverlängerung wieder entfernt werden.

Dieses und andere Verfahren unter Verwendung von Klebstoffen erfordern eine Nachbehandlung des Eigenhaares nach dem Entfernen der Haarverlängerung. Hierbei müssen Klebstoffreste, die im Eigenhaar haften, mit einem geeigneten Lösungsmittel, meist Aceton, entfernt werden. Dies führt zu einer Schädigung des Eigenhaares, zumal die Haarverlängerungsverfahren in regelmäßigen Abständen, ca. alle 6 Wochen, wiederholt werden müssen. Bei einer derartig häufigen Behandlung des natürlichen Kopfhaares mit Lösungsmitteln kann es zu einer Zerstörung des Eigenhaares an den Anschlußstellen kommen.

Es ist das Ziel der vorliegenden Erfindung, eine Vorrichtung zur Verlängerung von Eigenhaar und zur Dauerbefestigung von Kunsthaar und/oder Echthaar der eingangs genannten Art zu entwickeln, die auf einfache und kostengünstige Weise eine Verlängerung von Eigenhaar oder eine Dauerbefestigung einer Verlängerungssträhne oder eines Haarteiles gestattet, ohne das Eigenhaar hierbei zu schädigen.

Die Aufgabe der Erfindung wird durch eine Vorrichtung mit den Merkmalen des Kennzeichens von Anspruch 1 Anspruchs 1 sowie ein Verfahren mit den Merkmalen des Anspruchs 16 gelöst.

Der Vorteil dieser Erfindung liegt darin, daß die mechanische Verbindung zwischen Eigenhaar und einer Verlängerungssträhne aus Kunsthaar oder Echthaar, ohne Anwendung von Klebstoff, durch das Aufschrumpfen des Schlauches auf einem Bereich geschieht, in dem sich neben der Eigenhaarsträhne und der Verlängerungssträhne aus Kunsthaar oder Echthaar eine lagefixierte Verdickung, wie ein Knoten im Eigenhaar, befindet.

Dieser Knoten leistet einen wichtigen Beitrag zur Stabilität der Verbindung, weil er sich etwa in der Mitte des Schrumpfschlauches bezüglich der Längsachse befindet und der Schrumpfschlauch unter Hitzeeinwirkung beidseits des Knotens auf einen geringeren Querschnitt verengt wird, als dies im Bereich des Knotens möglich ist. Dadurch wird eine zusätzliche Haltefunktion erreicht, die im Stand der Technik durch die Anwendung von Klebstoffen bewirkt wird.

Das erfindungsgemäße Verfahren besitzt den Vorteil, daß die darin hergestellte Verbindung zwischen Eigenhaar und Kunsthaar oder Echthaar rückstandsfrei lösbar ist, wodurch es auch bei häufiger Anwendung zu keiner Schädigung des Eigenhaares kommt. Die Anwendung ist schmerzfrei und die dabei auftretenden Zugkräfte sind minimal, so daß Durchblutungsstörungen in Bereich der Kopfhaut vermieden werden. Wegen des geringen Gewichts und der hohen Flexibilität der Verbindungselemente werden die Verlängerungssträhnen vom Träger nicht als störend empfunden.

Nach einer bevorzugten Ausführungsform ist das im schrumpfbaren Schlauch angeordnete Ende der Strähne aus Kunsthaar oder Echthaar in einem thermoresistenten Klebstoff eingebettet. Hierdurch bildet sich ein guter Zusammenhalt der Verlängerungshaarsträhne und das Einschieben der Verlängerungshaarsträhne in den schrumpfbaren Schlauch im Rahmen des erfindungsgemäßen Verfahrens wird erleichtert. Des weiteren sind die bei der erfindungsgemäßen Vorrichtung und dem Verfahren zur Anwendung gelangenden Strähnen aus Kunsthaar oder Echthaar mehrfach verwendbar, so daß durch die Verklebung des Endes die Entnahme und Aufbewahrung der Verlängerungshaarsträhne wesentlich verbessert wird.

Nach einer weiteren Ausführungsform ist die Energieübertragungseinrichtung eine Hitzeklammer, die zwei einander zu gerichtete Profilbacken besitzt, von denen mindestens eine Profilbacke erhitzbar ist.

Die Verwendung einer Hitzeklammer besitzt den Vorteil, daß die zum Schrumpfen des Schlauchs aufzuwendende Wärmeenergie auf sehr bequeme Weise auf den schrumpfbaren Schlauch übertragen werden kann. Des weiteren findet die Wärmeübertragung sehr gezielt statt, das heißt, die zum Schrumpfen des Schlauches aufzuwendende Wärmeenergie wird durch das direkte Inkontaktbringen der Hitzeklammer mit dem Schrumpfschlauch übertragen. Dadurch kann der gesamte Energieaufwand verringert werden, jedoch wird auch die Wärmeentwicklung in der Umgebung des schrumpfbaren Schlauchs sehr gering gehalten. Dies ist von großer Wichtigkeit, weil die Verbindungsstellen zwischen Eigenhaar und der Verlängerungssträhne aus Kunsthaar oder Echthaar meist sehr nahe der Kopfhaut liegen und somit eine Schmerzentwicklung vermieden werden kann.

Nach einer weiteren Ausführungsform besitzt die Hitzeklammer entweder einen feststehenden und einen schwenkbaren Schenkel oder aber zwei schwenkbare Schenkel, an denen jeweils die Profilbacken befestigt sind. Dabei kann die Hitzeklammer von einer geöffneten Position in eine geschlossene Position gebracht werden, in der die Profilbacken in einem geringen Abstand zueinander beabstandet sind oder in Kontakt zueinander sind.

Durch das Vorsehen eines oder zweier schwenkbarer Schenkel kann die Hitzeklammer geöffnet werden, der zu behandelnde Schrumpfschlauch mit der darin befindlichen verknoteten Eigenhaarsträhne und der Verlängerungssträhne zwischen den Profilbacken angeordnet werden oder aber in eine der Profilbacken eingelegt werden und anschließend die Hitzeklammer in eine geschlossene Position gebracht werden, in der beide Profilbacken in Kontakt zu dem schrumpfbaren Schlauch treten.

Hierzu ist es vorteilhaft, daß eine oder beide Profilbacken eine Vertiefung besitzen, in die der schrumpfbare Schlauch einlegbar ist. Um weiterhin eine Verengung des Schrumpfschlauches beidseits des im Schrumpfschlauch befindlichen Knotens zu gestalten, ist es vorteilhaft, daß eine oder beide Profilbacken eine Einbuchtung besitzen, in welche die lagefixierte Verdickung, beispielsweise der Knoten, einlegbar ist.

Nach einer bevorzugten Ausführungsform sind beide Profilbacken erhitzbar. Hierdurch kommt es zu einem gleichmäßigen Wärmeeintrag in den schrumpfbaren Schlauch, wodurch die Behandlungsdauer zum Herstellen eines Verbindungselementes reduziert werden kann. Bevorzugt sind beide erhitzbare Profilbacken auf eine Temperatur zwischen 100°C und 350°C erhitzbar. Hierbei können entweder beide Profilbacken auf dieselbe Temperatur erhitzbar sein; bevorzugt ist jedoch, daß eine Profilbacke auf eine niedrigere Temperatur erhitzbar ist als die andere Profilbacke. Dies besitzt den Vorteil, daß in unmittelbarer Nähe zur Kopfhaut gearbeitet werden kann, indem die Hitzeklammer so gehalten wird, daß die der Kopfhaut zugewandte Profilbacke eine niedrigere Temperatur besitzt als die der Kopfhaut abgewandte Proiflbacke. Hierdurch kann auch in unmittelbarer Nähe zur Kopfhaut gearbeitet werden, ohne aufgrund der hohen Hitzeentwicklung einen Schmerz hervorzurufen oder das in unmittelbarer Nähe befindliche Haar zu schädigen.

Nach einer bevorzugten Ausführungsform ist eine oder sind beide Profilbacken mit einem Temperatursensor versehen.

Dies besitzt den Vorteil, daß die Temperatur der einen oder beider Profilbacken kontrolliert werden können, wodurch das Auftreten von Störungen rechtzeitig erkannt werden kann, wobei bei einer zu geringen Temperatur die Gefahr einer nicht haltbaren Verbindung zwischen Eigenhaar und der Verlängerungssträhne einerseits, aber auch bei einer zu hohen Temperatur die Gefahr einer Schädigung des Haars vermieden werden kann.

Bevorzugt ist die Temperatur einer oder beider Profilbacken regelbar. Damit können, je nach Anwendungsfall und je nach Verwendung verschiedener Materialien für den schrumpfbaren Schlauch, die hierfür am besten geeigneten Temperaturen eingestellt werden und deren Einhaltung überprüft werden.

Bei einer bevorzugten Ausführungsform ist eine oder sind beide Profilbacken mit einem Wärmeschutzelement versehen. Wie bereits angesprochen wurde, findet die Anwendung häufig in unmittelbarer Nähe zur Kopfhaut statt, so daß das Vorsehen eines Wärmeschutzelementes eine mögliche Schmerzentwicklung, insbesondere beim versehentlichen Inkontaktbringen der der Kopfhaut zugewandten Profilbacke der Hitzeklammer mit der Kopfhaut, vermeidet. Vorzugsweise ist das Wärmeschutzelement eine Umhüllung der Profilbacke aus einem Material, insbesondere Kunststoff, mit schlechter Wärmeleitfähigkeit.

Nach einer weiteren Ausführungsform kann die Hitzeklammer bei Betätigung eine einstellbare Zeitspanne in der geschlossenen Position verbleiben. Hierdurch kann die für den Wärmeeintrag in den schrumpfbaren Schlauch am besten geeignete Kontaktzeit zwischen Schrumpfschlauch und Profilbacken eingestellt werden und die Hitzeklammer verbleibt automatisch diese vorgewählte Zeitspanne in der geschlossenen Position. Hierdurch können Bedienungsfehler ausgeschlossen werden, die zu einer unzureichenden mechanischen Verbindung der Verlängerungssträhne mit dem Eigenhaar, aber auch zu unerwünschter Schmerzeinwirkung führen kann.

Nachfolgend wird die vorliegende Erfindung rein beispielhaft anhand der beigefügten Zeichnungen beschrieben. Es zeigen:
- Fig. 1: eine schematische Ansicht der erfindungsgemäßen Vorrichtung zur Haarverlängerung;
- Fig. 2: einen schematischen Ausschnitt der Haarverbindung im Bereich des schrumpfbaren Schlauches;
- Fig. 3: eine Ausführungsform einer Energieübertragungseinrichtung in Form einer Hitzeklammer;
- Fig. 4: eine Ausführungsform einer Profilbacke in Explosionsdarstellung; und
- Fig. 4a: eine Draufsicht auf auf die Heizfläche der Profilbacke gemäß Fig. 4;
- Fig. 5: eine andere Ausführungsform einer Profilbacke in Explosionsdarstellung.

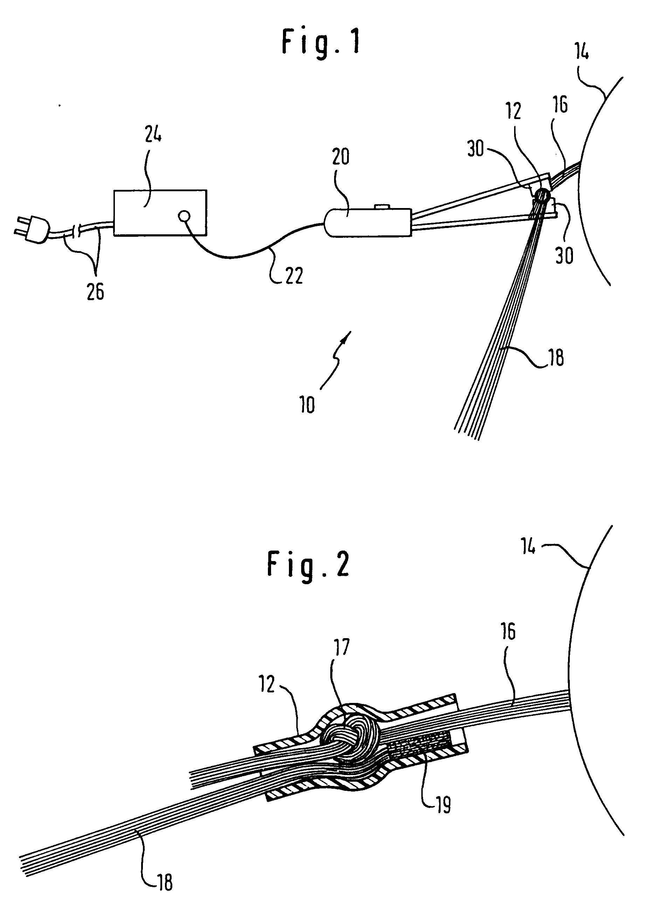

Fig. 1 zeigt eine schematische Ansicht der Vorrichtung zur Verlängerung und zur Dauerbefestigung von Eigenhaar mit Kunsthaar und/oder Echthaar, die allgemein mit der Referenznummer 10 bezeichnet ist. Die Vorrichtung besteht aus einem schrumpfbaren Schlauch 12, der nahe dem Kopf 14 auf eine Eigenhaarsträhne 16 sowie eine Verlängerungssträhne 18 aus Kunsthaar und/oder Echthaar aufgeschoben ist. Wie später anhand von Fig. 2 dargestellt wird, befindet sich in der Eigenhaarsträhne 16 ein Knoten. Eine Energieübertragungseinrichtung, im dargestellten Fall in Form einer Hitzeklammer 20, überträgt Wärmeenergie auf den schrumpfbaren Schlauch 12, der im folgenden kurz als Schrumpfschlauch bezeichnet wird.

Anstelle der Hitzeklammer 20 sind verschiedene andere technische Varianten einer Energieübertragungseinrichtung denkbar. So kann neben dem Erzeugen von Wärmeenergie durch ein geeignetes Wärmeträgermedium bzw. durch die Verwendung eines Widerstandsdrahtes der Energieeintrag auch durch Laserbeschuß oder durch Aussenden von Ultraschall geschehen.

Die Hitzeklammer 20 wird vorzugsweise über einen Widerstandsdraht beheizt und ist durch ein Verbindungskabel 22 mit einer Steuereinheit 24 verbunden, die wiederum batterie- oder akkugespeist ist, oder aber über eine Netzleitung 26 mit dem Stromnetz verbunden sein kann.

Die Steuereinheit kann im einfachsten Falle eine oder beide Profilbacken 30 der Hitzeklammer 20 mit Energie versorgen, aber auch weiterführende Anzeige- oder Regelaufgaben übernehmen. So kann die Steuereinheit 24 die über Temperaturfühler an den Profilbacken aufgenommene Temperatur in einem Regelkreis verarbeiten und somit für eine konstante Einhaltung der Temperatur einer oder beider Profilbacken sorgen, aber auch lediglich die vom Temperaturfühler aufgenommene Temperatur oder Temperaturen anzeigen oder aber bei einem automatischen Schließen der Hitzeklammer 20 die Bewegung eines oder beider Schenkel der Hitzeklammer 20 so ansteuern, daß diese eine voreingestellte Zeitspanne in der geschlossenen Position verbleiben.

Fig. 2 zeigt eine schematische Ansicht der Verbindung zwischen einer Eigenhaarsträhne 16 sowie einer Verlängerungssträhne 18 mit einem Schrumpfschlauch 12. Zur einfacheren Verdeutlichung ist nur eine einzige Eigenhaarsträhne 16 am Kopf 14 dargestellt. Die Eigenhaarsträhne besteht, je nach Haardicke des Kunden, wie auch den speziellen Wünschen des Kunden angepaßt, aus etwa zehn bis fünfzig Haaren. Angepaßt auf die Dicke dieser Haarsträhnen stehen Schrumpfschläuche in verschiedenen Durchmesserabstufungen zur Verfügung. Die Eigenhaarsträhne 16 wird vorzugsweise nahe dem Kopf 14 verknotet, wobei hierfür verschiedene Techniken bekannt sind. Vorzugsweise wird mit einer Häkelnadel eine Verschlingung im Haar erzeugt.

In Fig. 2 endet die Eigenhaarsträhne 16 kurz nach dem Austritt aus dem Schrumpfschlauch 12. Das erfindungsgemäße Verfahren zur Verlängerung von Eigenhaar kann jedoch auch dann zur Anwendung kommen, wenn eine Übergangszeit zwischen kurz geschnittenen und wunschgemäß lang gewachsenen Haaren überbrückt werden soll. In diesem Fall wird die Verbindung zwischen der Eigenhaarsträhne und der Verlängerungssträhne ebenfalls vorzugsweise in unmittelbarer Nähe zum Kopf 14 durchgeführt; die Eigenhaarsträhne 16 kann jedoch trotzdem langgewachsen, beispielsweise schulterlang sein.

Bei der Durchführung des erfindungsgemäßen Verfahrens wird nach dem Verknoten der Eigenhaarsträhne 16 der Schrumpfschlauch 12 über die Eigenhaarsträhne 16 geschoben, so daß sich der Knoten 17 bezüglich der axialen Länge des Schrumpfschlauches etwa in der Mitte desselben befindet. Anschließend wird die Verlängerungssträhne 18 ebenfalls in den Schrumpfschlauch eingeschoben, wobei darauf geachtet werden muß, daß die Verlängerungssträhne 18 sich nach dem Einführen über die gesamte Länge des Schrumpfschlauches 12 oder einen großen Anteil der Länge des Schrumpfschlauches 12 erstreckt. Die Verlängerungssträhne 18 besitzt zur Verankerung hinter dem Knoten 17 eine Klebestelle 19 aus thermisch nicht schmelzbarem Kleber, die innerhalb des Schrumpfschlauches 12 zu liegen kommt. Vorteilhafterweise erleichtert die Klebestelle 19 das Einsetzen der Verlängerungssträhne 18.

Die Klebestelle 19 wird in einem vorgeschalteten Verfahrensschritt auf die Verlängerungssträhne 18 aufgebracht und dient dazu, diese leichter handhabbar zu machen. Die Verlängerungssträhne ist mehrfach wiederverwendbar, so daß ein fester Zusammenhalt der Strähne für das Einschieben in den Schrumpfschlauch, für die Entnahme aus dem Schrumpfschlauch und für eine etwaige Zwischenlagerung der Verlängerungssträhne sehr vorteilhaft ist.

Vorzugsweise wird das in der Verlängerungssträhne zusammengefaßte Haar im Bereich der Klebestelle 19 schraubenlinienförmig gedreht, wodurch sich eine sehr gute Verbindung zum eng anliegenden Schrumpfschlauch 12 und zu der Eigenhaarsträhne 16 im Bereich der Knoten 17 bildet.

Der Schrumpfschlauch ist aus Kunststoff gefertigt und besitzt eine Länge von etwa 15 mm. In der Darstellung in Fig. 2 ist der Schrumpfschlauch 12 unter Wärmeeinwirkung auf die Verbindung der beiden Haarsträhnen aufgeschrumpft, wodurch sich eine Ausbuchtung im Bereich des Knoten 17 bildet.

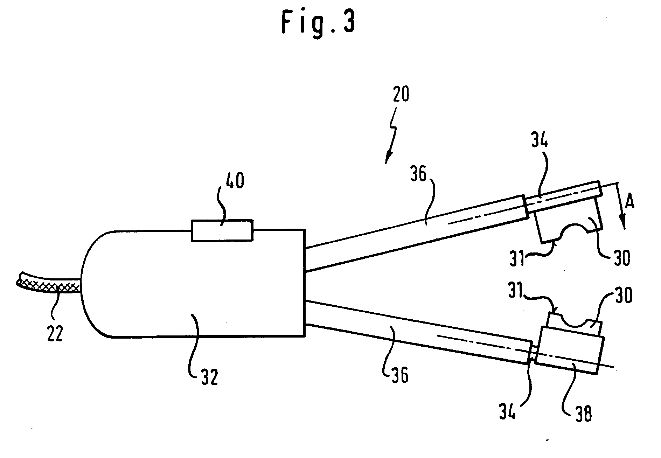

Fig. 3 zeigt eine Ausführungsform einer Hitzeklammer 20 gemäß der vorliegenden Erfindung.

Die Hitzeklammer 20 besteht im wesentlichen aus einem Handgriff 32, Schenkeln 34, Profilbacken 30 sowie dem Verbindungskabel 22. Der Handgriff 32 besteht aus einer isolierenden Ummantelung, vorzugsweise aus Kunststoff, innerhalb derer sich die Stromzufuhr über das Verbindungskabel 22, die Befestigung der Schenkel 34 in Form eines feststehenden und eines schwenkbaren Schenkels oder auch in Form von zwei schwenkbaren Schenkeln, die Übertragung des Meßsignales bzw. der Meßsignale eines oder mehrerer Temperaturfühler und in einer möglichen Ausführungsform ein Mechanismus zum automatischen Schließen der Hitzklammer durch das Aufeinander-zu-Bewegen der Schenkel 34 befindet.

Innerhalb der Schenkel 34 kann sich die Wärmeerzeugungseinrichtung befinden, die beispielsweise ähnlich der eines Lötkolbens ausgeführt ist. Vorzugsweise sind die Schenkel 34 mit einer Isolationsumhüllung 36 umgeben.

An den vom Handgriff 32 entfernten Enden der Schenkel 34 sind die Profilbacken 30 befestigt. Die Profilbacken bestehen aus einem gut wärmeleitenden Material, vorzugsweise einem gut wärmeleitenden Metall. Insbesondere ist die Ausführung der Profilbacken in Aluminium oder Bronze vorzuziehen, weil diese Metalle einerseits eine gute Wärmeleitfähigkeit besitzen, andererseits leicht bearbeitbar sind.

Die Profilbacken 30 können in beliebiger Weise an den Schenkeln 34 befestigt sein, und werden beim Betätigen der Hitzeklammer 20 mit den Heizflächen 31 aufeinander zu bewegt, wie dies anhand des Pfeiles A in Fig. 3 dargestellt ist. Im folgenden soll die in Fig. 3 dargestellte Anordnung der Profilbacken 30 zueinander in größerem Abstand als geöffnete Position der Hitzeklammer 20 bezeichnet werden, während das Schwenken des Schenkels 34 in Pfeilrichtung A und das damit verbundene Inkontaktbringen bzw. nahezu Inkontaktbringen der Heizflächen 31 der Profilbacken 30 als geschlossene Position der Hitzeklammer bezeichnet wird.

Die Heizflächen 31 der Profilbacken 30 können eine beliebige Form besitzen, sind jedoch vorzugsweise so profiliert, daß ein Schrumpfschlauch 12, der senkrecht zur Zeichenebene in Fig. 3 zwischen den Heizflächen 31 angeordnet wird, in korrespondierende Vertiefungen der Heizflächen 31 einlegbar ist. Dies besitzt den Vorteil, daß der Schrumpfschlauch auf eine der beiden Heizflächen 31 aufgelegt bzw. eingelegt werden kann und bereits eine gewisse Lagefixierung erfährt, bevor die andere Heizfläche in Richtung des Schrumpfschlauches schwenkt, wenn die Hitzeklammer in die geschlossene Position gebracht wird.

Eine oder beide Profilbacken 30 können mit einem Wärmeschutzelement 38 verbunden sein, das die Profilbacke außerhalb der Heizfläche ganz oder teilweise umschließt. Das Wärmeschutzelement ist vorzugsweise aus einem Material mit schlechter Wärmeleitfähigkeit gebildet, wie sie viele Kunststoffe, beispielsweise Teflon, besitzen.

Die Bedienung der Hitzklammer 20 mit Hilfe des Betätigungsschalters 40, der die Hitzeklammer von der geöffneten in die geschlossene Position bringt, kann über verschiedene Wirkmechanismen geschehen, die in der Technik bekannt sind.

Eine der Profilbacken, aber auch beide Profilbacken, können elektrisch beheizt werden. Vorzugsweise sind beide Profilbacken erhitzbar, wobei entweder beide Profilbacken auf dieselbe, fest vorgegebene Temperatur erhitzbar sind, oder beide Profilbacken auf eine fest vorgegebene, aber unterschiedliche Temperatur erhitzbar sind, oder aber auch beide Profilbacken auf eine gemeinsam für beide oder individuell für jede einzelne einstellbare Temperatur erhitzbar sein können. Vorzugsweise sind beide Profilbacken auf eine Temperatur zwischen 100°C und 350°C erhitzbar. Als besonders vorteilhaft wurde das Vorsehen verschiedener Temperaturen gefunden, wobei eine Profilbacke auf 120°C und die andere Profilbacke auf 220°C erhitzbar ist.

Zur Kontrolle der Temperaturen der Profilbacken, aber auch zur Regelung derselben, können sich an einer oder beiden Profilbacken ein oder mehrere Temperaturfühler 42 befinden. Hierbei können alle in der Technik bekannten Temperaturfühler, wie Widerstandstemperaturfühler oder Bimetallthermoelemente Verwendung finden. Insbesondere ist eine genaue Einhaltung der Temperatur, insbesondere ein Vermeiden der Temperaturüberschreitung, an der dem Kopf zugewandten Profilbacke, von Wichtigkeit. Aus diesem Grunde ist an dieser, sogenannten kopfseitigen Profilbacke, auch vorzugsweise ein Wärmeschutzelement angeordnet.

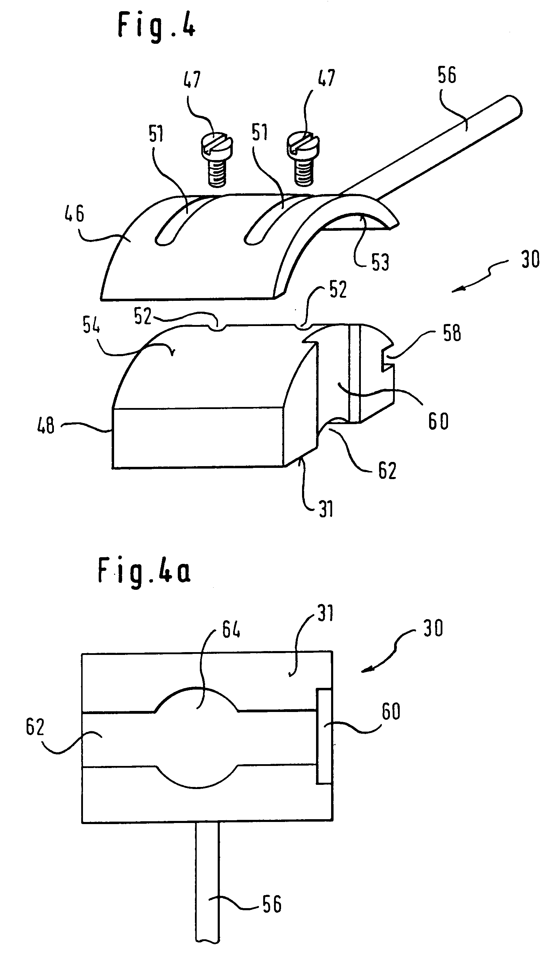

Fig. 4 zeigt den Aufbau einer Ausführungsform einer Profilbacke zur Verwendung an einer Hitzeklammer. Die Profilbacke 30 besteht aus zwei Teilen, einem Oberteil 46 und einem Unterteil 48, die in geeigneter Weise, beispielsweise mit Schrauben 47, fest miteinander verbindbar sind. Das Oberteil wie auch das Unterteil bestehen vorzugsweise aus einem gut wärmeleitenden Material, das gleichzeitig leicht zu bearbeiten ist, wie Aluminium oder Bronze.

Die Fläche 53 des Oberteils 46 besitzt eine konkav ausgebildete Rundung, die korrespondierend zur konvexen Rundung der Fläche 54 des Unterteils 48 ausgebildet ist. Im Oberteil 46 sind Langlöcher 51 gebildet, durch welche die Befestigungsschrauben 47, die in die Gewinde 52 einschraubbar sind, hindurchgreifen. Dadurch läßt sich die aus dem Oberteil 46 und dem Unterteil 47 zusammengesetzte Profilbacke 30 bezüglich ihrer Neigung relativ zur Befestigungsstange 56 verstellen, die wiederum in geeigneter Weise mit dem Schenkel 34 der Profilbacke 30 verbunden ist.

Das Unterteil 48 kann eine Einkerbung 58 besitzen, in die ein Thermofühler eingelegt werden kann. Zusätzlich besitzt das Unterteil 48 eine Aussparung 60, die im Bereich der Vertiefung 62 zum Einlegen des Schrumpfschlauches angeordnet ist und dazu dient, den Abstand des erhitzten Oberteiles 48 zum freiliegenden Kunsthaar oder Echthaar zu vergrößern. Dadurch soll eine Schädigung des Kunst- oder Echthaares vermieden werden.

Fig. 4a zeigt eine Draufsicht auf die Heizfläche 31 der Profilbacke 30 gemäß Fig. 4. Neben der Vertiefung 62 ist eine Einbuchtung 64 dargestellt, die der Aufnahme des verdickten Bereiches des Schrumpfschlauches im Bereich des Knotens 17 dient.

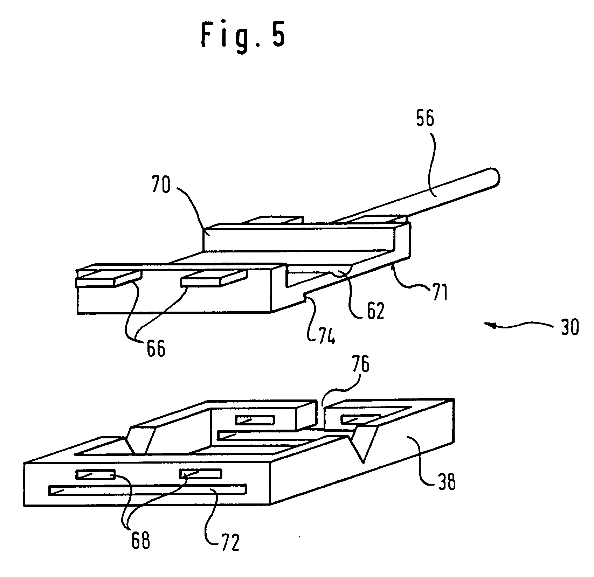

Fig. 5 zeigt eine andere Ausführungsform einer Profilbacke zur Verwendung an einer Hitzeklammer 20 gemäß der vorliegenden Erfindung.

Die Profilbacke 30 besteht aus einer Wanne 70, die aus einem gut leitenden Material, insbesondere Aluminium oder Bronze, gefertigt ist. Wie bereits anhand der in Fig. 4 dargestellten Profilbacke erläutert wurde, besitzt die Wanne 70 eine Befestigungsstange 56 sowie eine Vertiefung 62 zum Einlegen des Schrumpfschlauches 12. In gleicher Weise, wie anhand von Fig. 4 beschrieben wurde, kann die Wanne 70 zur Aufnahme des im Bereich des Knotens 17 verdickten Abschnittes des Schrumpfschlauches, sowie auf einer oder beiden Seiten Aussparungen 60 (nicht dargestellt) zum Vergrößern des Abstandes der beheizten Wanne zum freiliegenden Kunst- oder Echthaar besitzen.

An der Wanne 70 sind mehrere Nasen 66 angeordnet, die der Verbindung der Wanne 70 mit dem Wärmeschutzelement 38 dienen. Hierzu wird das Wärmeschutzelement 38 mit der Wanne 70 befestigt, indem die Nasen 66 durch korrespondierende Öffnungen 68 im Wärmeschutzelement hindurchtreten.

Ein Zusammenbau der beiden Teile 70 und 38 ist in der dargestellten Ausführungsform möglich, da das Wärmeschutzelement vorzugsweise aus einem gut wärmeisolierenden Kunststoff wie Teflon hergestellt ist, der elastisch genug ist, um so weit gedehnt zu werden, daß die Nasen 66 auf beiden Seiten in die Öffnungen 68 eingeschoben werden können.

Das Wärmeschutzelement 38 ist vorzugsweise so geformt, daß ein Luftspalt zwischen der oberseitigen Fläche 71 der Wanne 70 und der diese bedeckende Fläche des Wärmeschutzelements 38 besteht. Innerhalb dieses Luftspaltes kann eine freie Konvektionsströmung von Luft auftreten, wobei die Konvektionsschlitze 72 der gezielten Wärmeabfuhr dienen. Hierdurch läßt sich eine Abkühlung um etwa 30 Kelvin über der Dicke des Luftspalts erzielen.

In der Fläche 71 der Wanne 70 ist zusätzlich ein Absatz 74 angeordnet, der der Aufnahme eines Thermofühlers dient. Die Aussparung 76 im Wärmeschutzelement 38 dient der Aufnahme der Befestigungsstange 56.

Während eine Hitzeklammer 20 denkbar ist, deren beide Profilbacken gemäß der in Fig. 4 dargestellten Ausführungsform oder gemäß der in Fig. 5 dargestellten Ausführungsform ausgebildet sind, besteht eine vorteilhafte Ausführungsform darin, die der Kopfhaut zugewandte Profilbacke der Hitzeklammer gemäß der Ausführungsform nach Fig. 5 auszubilden und die andere Hitzklammer nach Fig. 4 auszuführen.

Das erfindungsgemäße Verfahren zur Verlängerung von Eigenhaar mit Kunst- und/oder Echthaar und zur Dauerbefestigung von Kunsthaar und/oder Echthaar läuft in den folgenden Schritten ab.

In einem vorgeschalteten Schritt wird die Strähne aus Kunst- und/oder Echthaar vorbehandelt, indem die Haare des in den Schrumpfschlauch einzuschiebenden Endes der Verlängerungssträhne mit einem thermisch stabilen Klebstoff verbunden werden. Hier kann ein schnell härtender Kleber angewandt werden, beispielsweise ein Kleber auf Cyanacrylatbasis. Vorteilhafterweise wird die mit einem Klebstoff vorbehandelte Verlängerungssträhne im Bereich des geklebten Endes schraubenlinienförmig verdreht.

Anschließend wird eine Strähne von Eigenhaar aus zehn bis fünfzig Haaren zusammengefaßt, und die Eigenhaarsträhne mit einem Knoten versehen, der sehr nahe an der Kopfhaut, vorzugsweise etwa 5 mm von dieser entfernt, liegt. Eine bevorzugte Weise, diesen Knoten zu bilden, liegt in einer Verschlingung der Haarsträhne mit einer Häkelnadel.

Daraufhin wird ein Schrumpfschlauch auf den Knoten der Eigenhaarsträhne aufgeschoben, so daß der Knoten der Eigenhaarsträhne in etwa in der Mitte des Schrumpfschlauches bezüglich seiner axialen Länge zu liegen kommt.

Anschließend wird die in der oben bezeichneten Weise vorbehandelte Strähne aus Kunsthaar und/oder Echthaar in den Schlauch eingeschoben, so daß diese möglichst die gesamte axiale Länge des Schrumpfschlauches füllt. Schließlich wird der Schrumpfschlauch unter Eintrag von Energie geschrumpft und die mechanisch feste Verbindung hergestellt. Alternativ kann das schrumpfbare Befestigungselement, das vorzugsweise Schlauchform besitzt, auch eine andere Geometrie besitzen, sofern sich hiermit eine in gleicher Weise stabile mechanische Befestigung herstellen läßt.

Der Vorteil des erfindungsgemäßen Verfahrens liegt darin, daß kein Kleber zur Anwendung gelangt und eine leicht fixierbare wie lösbare Verbindung zwischen einer Echthaarsträhne und einer Verlängerungssträhne herstellbar ist, die keine Schädigung des Echthaares hervorruft und mehrfach wiederverwendbar ist.

Das Verfahren findet sowohl bei der Verlängerung und Verdichtung von Eigenhaar, als auch bei der Befestigung von Haarteilen Verwendung.

## Patentansprüche

1. Vorrichtung zur Verlängerung von Eigenhaar (16) mit Kunsthaar und/oder Echthaar (18) und zur Dauerbefestigung von Kunsthaar und/oder Echthaar (18) wobei
- ein unter Energieeintrag schrumpfbarer Schlauch (12) über einer Strähne (16) aus Eigenhaar sowie über einer Verlängerungssträhne (18) aus Kunsthaar oder Echthaar angeordnet ist; und
- eine Energieübertragungseinrichtung (20) Energie, insbesondere Wärmeenergie, auf den schrumpfbaren Schlauch (12) überträgt,
dadurch **gekennzeichnet,** daß
der unter Energieeintrag schrumpfbare Schlauch (12) über einer lagefixierten Verdickung, insbesondere einem Knoten (17) angeordnet ist.

2. Vorrichtung nach Anspruch 1, dadurch gekennzeichnet, daß das im schrumpfbaren Schlauch angeordnete Ende der Verlängerungssträhne aus Kunsthaar oder Echthaar in einem thermoresistenten Klebstoff eingebettet ist.

3. Vorrichtung nach Anspruch 1 oder 2,
dadurch gekennzeichnet, daß
die Energieübertragungseinrichtung eine Hitzeklammer ist, die zwei einander zu gerichtete Profilbacken besitzt, von denen mindestens eine Profilbacke erhitzbar ist.

4. Vorrichtung nach Anspruch 3,
dadurch gekennzeichnet, daß
die Hitzeklammer einen feststehenden und einen schwenkbaren Schenkel oder zwei schwenkbare Schenkel besitzt, an denen jeweils die Profilbacken befestigt sind;
wobei die Hitzeklammer von einer geöffneten Position in eine geschlossene Position bringbar ist, in der die Profilbacken in einem geringen Abstand zueinander beabstandet sind oder in Kontakt zueinander sind.

5. Vorrichtung nach Anspruch 3 oder 4,
dadurch gekennzeichnet, daß
eine oder beide Profilbacken eine Vertiefung besitzen, in die der schrumpfbare Schlauch einlegbar ist.

6. Vorrichtung nach einem der Ansprüche 3 bis 5,
dadurch gekennzeichnet, daß
eine oder beide Profilbacken eine Einbuchtung besitzen, in welche die lagefixierte Verdickung, insbesondere der Knoten, einlegbar ist.

7. Vorrichtung nach einem der Ansprüche 3 bis 6,
dadurch gekennzeichnet, daß
beide Profilbacken erhitzbar sind.

8. Vorrichtung nach Anspruch 7,
dadurch gekennzeichnet, daß
beide erhitzbare Profilbacken auf eine Temperatur zwischen 100°C und 350°C erhitzbar sind.

9. Vorrichtung nach einem der Ansprüche 7 oder 8,
dadurch gekennzeichnet, daß
beide Profilbacken auf dieselbe Temperatur erhitzbar sind.

10. Vorrichtung nach einem der Ansprüche 7 oder 8,
dadurch gekennzeichnet, daß
eine Profilbacke auf eine niedrigere Temperatur erhitzbar ist als die andere Profilbacke.

11. Vorrichtung nach einem der Ansprüche 3 bis 10,
dadurch gekennzeichnet, daß
eine oder beide Profilbacken mit einem Temperatursensor versehen sind.

12. Vorrichtung nach Anspruch 7 oder 8,
dadurch gekennzeichnet, daß
die Temperatur einer oder beider Profilbacken regelbar ist.

13. Vorrichtung nach Anspruch 7 oder 8,
dadurch gekennzeichnet, daß
eine oder beide Profilbacken mit einem Wärmeschutzelement versehen sind.

14. Vorrichtung nach Anspruch 13,
dadurch gekennzeichnet, daß das Wärmeschutzelement eine Umhüllung aus einem Material, insbesondere Kunststoff, mit schlechter Wärmeleitfähigkeit ist.

15. Vorrichtung nach einem der Ansprüche 4 bis 14,
dadurch gekennzeichnet, daß
die Hitzeklammer bei Betätigung eine einstellbare Zeitspanne in der geschlossenen Position ist.

16. Verfahren zur Verlängerung von Eigenhaar (16) mit Kunsthaar und/oder Echthaar (18) und zur Dauerbefestigung von Kunsthaar und/oder Echthaar (18), umfassend die Schritte:
- Verknoten einer Strähne von Eigenhaar (16);
- Aufschieben eines unter Energieeintrag schrumpfbaren Befestigungselements (12), insbesondere eines Schlauchs auf den Knoten (17) in der Eigenhaarsträhne (16);
- Einschieben einer Verlängerungssträhne (18) aus Kunsthaar und/oder Echthaar in den Schlauch; und
- Schrumpfen des schrumpfbaren Befestigungselements (12) unter Eintrag von Energie.

17. Verfahren zur Verlängerung von Eigenhaar nach Anspruch 16, dadurch gekennzeichnet, daß
die Verlängerungssträhne aus Kunsthaar und/oder Echthaar vor dem Einschieben in das schrumpfbare Befestigungselement, insbesondere den Schlauch, vorbehandelt wird, indem die Haare des in den Schlauch einzuschiebenden Endes der Verlängerungssträhne aus Kunsthaar und/oder Echthaar mit einem thermisch stabilen Klebstoff verbunden werden.

18. Verfahren zur Verlängerung von Eigenhaar nach Anspruch 17,
dadurch gekennzeichnet, daß
die mit einem Klebstoff verbundene Verlängerungssträhne aus Kunsthaar und/oder Echthaar im Bereich des geklebten Endes schraubenlinienförmig verdreht ist.

## Claims

1. An apparatus for lengthening a person's own hair (16) by using artificial and/or genuine hair (18) and for permanently fastening artificial and/or genuine hair (18), wherein
- a tube (12) which can be shrunk when energy is applied is disposed above a strand (16) of a person's own hair and above an extension strand (18) of artificial and/or genuine hair; and
- energy application means (20) transfers energy, particularly thermal energy, to said shrinkable tube (12);
characterized in that
- the tube (12) which can be shrunk when energy is applied is disposed over a positionally secured thickened portion, particularly a knot.

2. An apparatus according to claim 1, characterized in that the end of said extension hair of artificial or genuine hair disposed within said shrinkable tube is embedded in a heat-resistant adhesive.

3. An apparatus according to claim 1 or 2,
characterized in that
said energy application means is constituted by heating irons having two profiled jaws directed toward one another, at least one profiled jaw of which is heatable.

4. An apparatus according to claim 3,
characterized in that
said heating irons have a stationary and a pivotable shank or two pivotable shanks to which said profiled jaws are respectively attached;
wherein said heating irons can be moved from an opened position into a closed position in which said profiled jaws are spaced apart from one another at a slight distance or are in contact with one another.

5. An apparatus according to claim 3 or 4,
characterized in that
one or both profiled jaws have a groove into which said shrinkable tube can be inserted.

6. An apparatus according to one of the claims 3 to 5,
characterized in that
one or both profiled jaws have an indentation into which said positionally secured thickened portion, particularly said knot, can be inserted.

7. An apparatus according to one of the claims 3 to 6,
characterized in that
both profiled jaws are heatable.

8. An apparatus according to claim 7,
characterized in that
both heatable profiled jaws are heatable to a temperature between 100°C and 350°C.

9. An apparatus according to one of the claims 7 to 8,
characterized in that
both profiled jaws are heatable to the same temperature.

10. An apparatus according to one of the claims 7 to 8,
characterized in that
one profiled jaw is heatable to a lower temperature than the other profiled jaw.

11. An apparatus according to one of the claims 3 to 10,
characterized in that
one or both profiled jaws are provided with a temperature sensor.

12. An apparatus according to claim 7 to 8,
characterized in that
the temperature of one or both profiled jaws can be regulated.

13. An apparatus according to claim 7 to 8,
characterized in that
one or both profiled jaws are provided with a heat insulation element.

14. An apparatus according to claim 13,
characterized in that
said heat insulation element is a sheath made of a material, particularly plastic, having poor thermal conductivity.

15. An apparatus according to one of the claims 4 to 14,
characterized in that
when actuated, said heating irons are in the closed position for an adjustable interval of time.

16. A method of lengthening a person's own hair (16) by using artificial hair and/or genuine hair (18) and of permanently fastening artificial and/or genuine hair (18),
characterized by the steps of:
- knotting a strand of a person's own hair (16);
- sliding a fastening element (12), particularly a tube, which can be shrunk when energy is applied, onto said knot (17) in said strand (16) of a person's own hair;
- sliding an extension strand (18) of artificial and/or genuine hair into said tube; and
- shrinking said shrinkable fastening element (12) when energy is applied.

17. A method of lengthening a person's own hair according to claim 16,
characterized in that
said extension strand of artificial and/or genuine hair is pretreated before insertion into said shrinkable fastening element, particularly said tube, in that the hairs of that end of said extension strand of artificial and/or genuine hair to be inserted into said tube are joined using a thermally stable adhesive.

18. A method of lengthening a person's own hair according to claim 17,
characterized in that
said extension strand of artificial and/or genuine hair joined using an adhesive is twisted helically in the region of the affixed end.

## Revendications

1. Dispositif pour allonger des cheveux vivants (16) avec des cheveux artificiels et/ou des cheveux naturels (18) et pour faire tenir, de manière permanente, ces cheveux artificiels et/ou naturels (18) en place, dans lequel
- un tube (12) rétrécissable par apport d'énergie est placé sur une mèche de cheveux vivants (16) ainsi que sur une mèche d'allongement (18) en cheveux artificiels ou naturels; et
- un moyen de transfert d'énergie (20), capable de transférer de l'énergie, en particulier de l'énergie thermique, sur le tube rétrécissable (12),
caractérisé en ce que
sous le tube (12) rétrécissable par apport d'énergie, on prévoit un épaississement d'immobilisation, en particulier un noeud (17).

2. Dispositif selon la revendication 1,
caractérisé en ce que
l'extrémité de la mèche d'allongement en cheveux artificiels ou naturels, disposée dans le tube rétrécissable, est enrobée dans une colle thermorésistante,

3. Dispositif selon la revendication 1 ou 2,
caractérisé en ce que
le moyen de transfert d'énergie est une pince chauffante avec deux mâchoires profilées réglables l'une par rapport à l'autre, au moins une des mâchoires profilées étant chauffée.

4. Dispositif selon la revendication 3,
caractérisé en ce que
la pince chauffante est constituée par une branche fixe et par une branche pivotante ou par deux branches pivotantes, sur lesquelles sont fixées les mâchoires respectives;
ce qui permet de faire passer la pince chauffante d'une position ouverte vers une position fermée, dans laquelle les mâchoires profilées sont légèrement espacées l'une de l'autre ou en contact mutuel.

5. Dispositif selon la revendication 3 ou 4,
caractérisé en ce que
l'une ou les deux mâchoires profilées comportent une gorge dans laquelle le tube rétrécissable peut être placé.

6. Dispositif selon l'une des revendications 3 à 5
caractérisé en ce que
une ou les deux mâchoires profilées comportent un creux dans lequel peut être placé l'épaississement d'immobilisation, en particulier un noeud.

7. Dispositif selon l'une des revendications 3 à 6,
caractérisé en ce que
les deux mâchoire profilées peuvent être chauffées.

8. Dispositif selon la revendication 7,
caractérisé en ce que
les deux mâchoires profilées chauffables peuvent être chauffées à une température entre 100 °C et 350 °C.

9. Dispositif selon l'une des revendications 7 ou 8,
caractérisé en ce que
les deux mâchoires profilées peuvent être chauffées à la même température.

10. Dispositif selon l'une des revendications 7 ou 8,
caractérisé en ce que
une des mâchoires profilées peut être chauffée à une température inférieure à celle de l'autre mâchoire profilée.

11. Dispositif selon l'une des revendications 3 à 10,
caractérisé en ce que
un ou les deux mâchoires profilées sont pourvues d'une sonde de température.

12. Dispositif selon la revendication 7 ou 8,
caractérisé en ce que
la température d'une ou des deux mâchoires profilées est réglable.

13. Dispositif selon la revendication 7 ou 8,
caractérisé en ce que
une ou les deux mâchoires profilées comportent un élément de protection thermique.

14. Dispositif selon la revendication 13,
caractérisé en ce que
l'élément de protection thermique est constitué par une gaine en un matériau peu conducteur de chaleur, en particulier en une résine synthétique.

15. Dispositif selon l'une des revendications 4 à 14,
caractérisé en ce que
la pince chauffante est maintenue en position fermée, pendant une durée réglable par une commande.

16. Procédé pour allonger des cheveux vivants (16) avec des cheveux artificiels et/ou des cheveux naturels (18) et pour faire tenir, de manière permanente, ces cheveux artificiels et/ou naturels (18) en place, comprenant les étapes consistant à :
- nouer une mèche de cheveux vivants (16);
- enfiler un élément de fixation rétrécissable par apport d'énergie (12), en particulier un tube, sur le noeud (17) de la mèche de cheveux vivants (16);
- enfiler une mèche d'allongement (18) en cheveux artificiels et/ou naturels dans le tube; et
- faire rétrécir l'élément d'immobilisation (12) rétrécissable par un apport d'énergie.

17. Procédé pour allonger des cheveux vivants selon la revendication 16,
caractérisé en ce que
avant d'enfiler dans l'élément d'immobilisation rétrécissable, en particulier un tube, la mèche d'allongement en cheveux artificiels et/ou en cheveux naturels, celle-ci subit un traitement, dans lequel les cheveux de l'extrémité de la mèche d'allongement en cheveux artificiels et/ou naturels enfilée dans le tube sont liés ensemble avec une colle thermostable.

18. Procédé pour allonger des cheveux vivants selon la revendication 17,
caractérisé en ce que
la mèche d'allongement en cheveux artificiels et/ou naturels liée par une colle est torsadée en hélice dans la région de l'extrémité collée.
